# FASCICULE DE BREVET EUROPEEN

(11) **EP 1 200 245 B1**
(45) Date de publication et mention de la délivrance du brevet: **30.11.2005**
(21) Numéro de dépôt: 01907682.7
(22) Date de dépôt: 24.01.2001
(51) Int. Cl.: B29C 59/02

(54) **PROCEDE DE FABRICATION UN PROFILE EN U POUR GOULOTTE, ET PROFILE AINSI OBTENU**
VERFAHREN ZUR HERSTELLUNG EINES U-FÖRMIGEN PROFILS FÜR EINE KABELRINNE, UND DANACH HERGESTELLTES PROFIL
METHOD FOR MAKING AN U-SHAPED PROFILE FOR A CABLE CHUTE, AND PROFILE SO OBTAINED

(30) Priorité: 24.01.2000 FR 0000850
(43) Date de publication de la demande: 02.05.2002
(73) Titulaire: PLANET WATTOHM, 60300 Senlis (FR)
(72) Inventeur: CLAISSE, Jean-Jacques, F-60800 Crépy en Valois (FR); ALBERT, Christophe, F-60300 Senlis (FR); DUMON, Paul, Kingsford, NSW 2032 (AU)
(74) Mandataire: Santarelli
(86) Numéro de dépôt international: PCT/FR2001/000221
(87) Numéro de publication internationale: WO 2001/053064

(56) Documents cités:
- DE-B- 2 212 355
- JP-A- 5 116 219
- US-A- 3 389 431
- US-A- 4 104 349
- US-A- 4 391 426
- PATENT ABSTRACTS OF JAPAN vol. 017, no. 483 (M-1472), 2 septembre 1993 (1993-09-02) & JP 05 116219 A (NEC TOHOKU LTD), 14 mai 1993 (1993-05-14)

## Description

L'invention concerne la fabrication de pièces plastiques munies d'au moins une zone mécaniquement affaiblie formant une amorce de trou.

Elle vise notamment, mais non exclusivement, la fabrication de profilés en matière plastique comportant une succession longitudinale d'amorces de trou destinées à permettre une fixation aisée de ces profilés en service. Il s'agit avantageusement de profilés constituant ou faisant partie de goulottes de câblage électrique.

On désigne ici par l'expression « amorce de trou » (on pourrait aussi utiliser la notion d'ébauche) un trou imparfaitement matérialisé, constitué par une zone mécaniquement affaiblie par rapport au reste de la pièce considérée ; une telle zone mécaniquement affaiblie peut notamment être un trou ménagé sur une partie seulement de l'épaisseur locale de la pièce considérée, un trou comportant sur une partie de sa profondeur un voile comportant une restriction de section (généralement concentrique au trou) qui est destiné à être détruit lors de la mise en place d'un élément de fixation, ou un contour mécaniquement affaibli séparant une partie centrale, destinée à être évacuée en service, du reste de la pièce ; les particularités précitées peuvent être combinées, par exemple avec un trou borgne comportant une restriction de section, dont le fond a un contour mécaniquement affaibli. Cette zone mécaniquement affaiblie peut être de section oblongue. La zone mécaniquement affaiblie peut aussi constituer un trou muni d'un lamage.

L'intérêt de prévoir, non pas un trou complet, mais simplement une amorce de trou formée d'un trou borgne, est qu'on est libre de n'utiliser qu'une partie des amorces de trou pour, par exemple, fixer la pièce considérée, sans risquer que les amorces non utilisées ne constituent des pièges à impuretés ou à poussières, voire nuisent à l'étanchéité du volume interne de la pièce ; cet intérêt est en particulier notable pour les goulottes, par exemple de câblage électrique , que l'on veut conserver aussi étanches que possibles vis à vis de l'extérieur (c'est le cas notamment des goulottes de câblage électrique destinées à être utilisées dans les pièces d'eau de locaux d'habitation).

Par ailleurs, lorsque l'amorce de trou est débouchante, la conservation de l'étanchéité est moins bonne, mais l'existence de restrictions dans les amorces de trou permet un centrage aisé des éléments de fixation (des vis le plus souvent) dans les amorces de trou utilisées en service.

Enfin le fait de prévoir des amorces de trou constituées de contours mécaniquement affaiblis est que les zones de Ja pièce où sont situées les amorces de trou non utilisées en service conservent une plus grande rigidité que si les trous étaient réalisés de façon complète tout en rendant aisé la mise en place des éléments de fixation dans les amorces effectivement utilisées.

L'intérêt d'amorces de trou oblongues est qu'elles peuvent s'étendre sur une section supérieure à la section des éléments de fixation finalement utilisés, et qu'elles permettent à l'utilisateur de choisir l'emplacement de son trou final à l'intérieur de l'amorce oblongue.

L'intérêt de lamages (surfaces d'appui encastrées destinées à subsister) est bien connu ; il permet notamment que la tête d'une vis de fixation soit escamotée dans l'épaisseur de la pièce.

On sait déjà réaliser des amorces de trou, ou des trous munis de lamage, dans des pièces en matière plastique. Ainsi, il est notamment connu de fabriquer des pièces par injection en prévoyant, dans le dessin des portions de moule, des saillies fixes, ou le plus souvent des tiroirs mobiles. Mais ce principe, consistant à aménager les trous lamés ou les amorces de trou dès la mise en forme de la matière plastique, nécessite de concevoir les moules en conséquence, et n'est applicable qu'aux pièces obtenues par injection, dont la géométrie le permet.

L'invention a pour objet un procédé de fabrication de pièces en matière plastique munies de zones mécaniquement affaiblies formant des amorces de trou (en pratique plus nombreuses qu'il n'est nécessaire pour les besoins de l'utilisation de ces pièces), selon lequel les zones mécaniquement affaiblies sont réalisées après production des pièces (ou du moins d'ébauches de celles-ci), de manière à la fois reproductible et fiable, esthétique et aisée, pour un coût modéré.

Elle propose à cet effet un procédé de fabrication d'un profilé en U pour goulotte muni d'au moins une zone mécaniquement affaiblie formant une amorce de trou dans une zone d'épaisseur constante, comportant une étape consistant à produire un profilé en U en matière thermoplastique, et pour former au moins une telle zone mécaniquement affaiblie formant une amorce de trou, au moins un cycle des étapes consistant à :
- réaliser localement un évidement traversant dans une zone de ce profilé qui a une épaisseur constante.
- échauffer localement ce profilé au moyen d'une sonde d'échauffement en sorte de rendre plastique cette zone de ce profilé qui a une épaisseur constante,
- modifier à l'aide d'un poinçon la géométrie de cette zone rendue plastique en sorte de délimiter dans ce profilé une zone mécaniquement affaiblie constituant une amorce de trou dont la forme est déterminée par celle du poinçon.

Ainsi, selon l'invention, on conforme du profilé la zone mécaniquement affaiblie par déformation d'une zone plastique du profilé, à l'aide d'un poinçon dont la forme détermine la forme de la zone mécaniquement affaiblie après refroidissement. Ce poinçon provoque un refoulement de la matière à l'état plastique, en pratique à l'encontre d'un contre-poinçon qui peut affleurer à la surface du profilé à l'opposé du poinçon. Le poinçonnage n'est donc pas complètement traversant et ne se fait que sur une partie de l'épaisseur puisqu'il subsiste de la matière dans le prolongement du poinçon (en considérant sa plus grande section).

L'intérêt de l'évidement est notamment d'éviter que la réalisation de la zone mécaniquement affaiblie, par déplacement de matière lors du poinçonnage, implique l'apparition de surépaisseur ; le fait que cet évidement soit traversant (avec une section en pratique constante) correspond à une manière simple et reproductible de réaliser un évidement.

Pour assurer une homogénéité du refoulement de la matière plastique, de manière préférée, on réalise la zone rendue plastique en sorte qu'elle entoure l'évidement.

Plusieurs conformations sont possibles pour l'amorce de trou.

Ainsi, selon une première forme possible, on modifie la géométrie de la zone rendue plastique en sorte de délimiter la zone mécaniquement affaiblie sous la forme d'un trou borgne dont le fond est constitué d'un voile continu. Ce voile garantit l'étanchéité des amorces de trou non utilisées. Ce voile affleure de préférence la surface de la pièce qui est à l'opposé du poinçon, auquel cas il n'est pas nécessaire de prévoir un contre-poinçon de forme particulière (il peut s'agir d'une simple surface plane).

Selon une autre forme avantageuse, on modifie la géométrie de la zone rendue plastique en sorte de délimiter la zone mécaniquement affaiblie sous la forme d'un trou traversant bordé par un voile périphérique. Ce voile périphérique peut se comprendre comme un voile (au sens de la première forme précitée) incomplet. Il matérialise une restriction de section avantageusement centrée sur le reste de l'amorce de trou, et peut servir pour centrer correctement, lors de l'utilisation, l'outil destiné à préparer un trou de fixation dans la paroi à laquelle la pièce doit être fixée, voire l'élément de fixation lui-même. Selon son épaisseur, soit ce voile périphérique est détruit lors de la mise en place d'un élément de fixation, soit il subsiste et constitue un lamage.

Selon encore une autre forme de réalisation avantageuse, on modifie la géométrie de la zone rendue plastique en sorte de délimiter la zone mécaniquement affaiblie par un contour formé d'évidements. De forme imagée cela correspond à matérialiser en « pointillés » creux le contour du trou qu'il est possible de réaliser, en rompant les zones résiduelles de matière reliant l'intérieur et l'extérieur du contour. Ce contour est de préférence formé d'évidements traversants, ce qui facilite la rupture des zones résiduelles de liaison. En variante, toutefois, ces évidements matérialisant le contour peuvent être borgnes. Selon encore une autre variante, le contour peut être matérialisé par un contour d'épaisseur constante mais réduite par rapport à l'épaisseur locale de la pièce (à la manière d'une gorge).

Le procédé de l'invention est tout particulièrement intéressant dans le cas où l'on produit par extrusion la pièce en matière thermoplastique. Le principe de l'extrusion conduit en effet à un profilé de section transversale constante, et la réalisation d'amorces de trou nécessite a priori des opérations spécifiques.

La réalisation des zones mécaniquement affaiblies peut être prévue après l'extrusion, en tirant profit de ce que la matière constitutive du profilé est encore tiède : l'apport de chaleur (ou plus généralement d'énergie) pour amollir localement la matière plastique peut en être réduit. A cet effet, de manière avantageuse, on réalise le cycle d'étapes au fur et à mesure que le produit est extrudé. On peut aussi réaliser ces étapes sur des tronçons préalablement découpés.

Le procédé de l'invention est d'autant plus utile qu'il y a dans la pièce une succession d'amorces de trou possibles ; à cet effet, de manière préférée, on réitère le cycle d'étapes en sorte de réaliser une succession d'amorces de trou.

Selon une disposition particulièrement avantageuse de l'invention, on échauffe localement la pièce au moyen d'une sonde dont une partie constitue le poinçon servant à modifier la géométrie de la zone rendue plastique. Il y a ainsi une optimisation du point de vue thermique (il n'y a pas de perte thermique entre le moment où la matière est localement échauffée au maximum et le moment où est appliqué le poinçon), et le nombre de pièces mécaniques mobiles est minimisé.

De manière particulièrement avantageuse, la sonde d'échauffement est une sonde à ultra-sons (on utilise parfois le terme de « sonotrode »).

Il a été indiqué que le poinçon détermine par sa forme celle de la future amorce de trou.

Selon un premier mode de réalisation, le poinçon comporte une portion d'extrémité terminée par une face transversale plane ; cela permet d'obtenir, au fond de l'amorce de trou, un voile d'épaisseur en principe sensiblement constante.

Selon un second mode de réalisation, le poinçon comporte une portion d'extrémité terminée par une face transversale comportant au moins un gradin. Cela permet, au choix de réaliser un voile obturant la totalité du futur trou, avec des variations d'épaisseur, ou une amorce de trou traversante, formant une restriction bordée par un voile périphérique ou un trou bordé par un lamage ; ce lamage peut lui-même être obturé par un voile frangible.

Ladite portion d'extrémité peut avoir tout simplement une section cylindrique.

Elle peut en variante avoir une section oblongue ; dans le cas d'un profilé, ce poinçon est de préférence orienté en sorte que sa plus grande dimension soit parallèle à l'axe longitudinal du profilé ; toutefois, pour donner le maximum de choix quant à l'emplacement des éléments de fixation dans les amorces de trou, le poinçon peut être changé d'orientation entre la réalisation de deux trous ou amorces de trou consécutives.

La portion d'extrémité peut avoir tout simplement une section constante, mais en variante, elle peut avoir une section décroissante ; cela permet d'obtenir des trous ou amorces de trou dans lesquels il est aisé de faire pénétrer un outil ou un élément de fixation du côté où le trou ou l'amorce de trou est la plus large, sans qu'une telle introduction soit aussi aisée de l'autre côté, voire même possible.

Selon encore une autre forme de réalisation, la portion d'extrémité peut être terminée par une face transversale (éventuellement concave) bordée par une série de dents axiales, s'étendant selon une ligne fermée, correspondant au contour à matérialiser ; elle peut aussi être terminée par une face transversale bordée par un rebord axial continu.

L'invention couvre aussi des profilés en U pour goulotte adaptés à être réalisés selon le procédé précité. Ainsi elle a également pour objet un profilé en U pour goulotte en matière plastique comportant, dans une paroi d'épaisseur constante bordée par des ailes, une succession longitudinale de zones mécaniquement affaiblies formant des amorces de trou.

De manière préférée, chaque zone mécaniquement affaiblie a la forme d'un trou borgne dont le fond est constitué d'un voile continu, ce qui est favorable à une bonne étanchéité entre les deux faces de la pièce.

Selon une autre forme de réalisation chaque zone mécaniquement affaiblie a la forme d'un trou traversant bordé par un voile périphérique ou un lamage, ce qui peut avoir un intérêt du point de vue centrage (même si la section n'est pas circulaire, le centrage peut n'être que longitudinal, ou transversal seulement).

Selon encore une autre forme de réalisation de profilé, chaque zone mécaniquement affaiblie est délimitée par un contour formé d'une succession d'évidements.

L'invention couvre aussi le cas particulier d'une goulotte de câblage électrique comportant un socle et un couvercle, ce socle faisant partie d'un profilé en U du type précité.

Des objets, caractéristiques et avantages de l'invention ressortent de la description qui suit, données à titre d'exemple illustratif non limitatif, en regard des dessins annexés sur lesquels :
- la figure 1 est une vue en coupe transversale d'un profilé dans une première étape du procédé selon l'invention,
- la figure 2 est une vue schématique en coupe transversale de ce profilé dans une seconde étape,
- la figure 3 est une vue en coupe transversale de ce profilé à l'état fini,
- la figure 4 est une vue en coupe transversale de ce profilé au début d'une troisième étape,
- la figure 5 est une vue similaire à un stade légèrement postérieur,
- la figure 6 est une vue similaire à un stade de fin de poinçonnage où le profilé a une section conforme à celle de la figure 3,
- la figure 7 est une vue en perspective schématique du profilé des figures 1 à 6,
- la figure 8 est un schéma de principe d'un exemple de réalisation du procédé complet de fabrication,
- la figure 9 est une vue analogue à celle de la figure 6, correspondant à une forme différente d'amorce de trou,
- la figure 10 est une vue analogue à celle de la figure 6, correspondant à une autre forme différente d'amorce de trou,
- la figure 11 est une vue en perspective d'un autre exemple de profilé ayant une amorce de trou oblongue,
- la figure 12 est une vue de dessus du profilé de la figure 11,
- la figure 13 est une vue en coupe de ce profilé selon la ligne XIII-XIII de la figure 12,
- la figure 14 est une vue en coupe transversale d'un autre profilé dans lequel une autre forme de trou ou d'amorce de trou est en cours de formation,
- la figure 15 est une vue en perspective de ce profilé à l'état fini,
- la figure 16 est une vue de dessus de ce profilé,
- la figure 17 est une vue de ce profilé selon la ligne de coupe XVII-XVII de la figure 16,
- la figure 18 est une vue en perspective d'encore un autre profilé,
- la figure 19 est une vue de dessus de ce profilé de la figure 18, et
- la figure 20 en est une vue en coupe selon la ligne XX-XX de la figure 19.

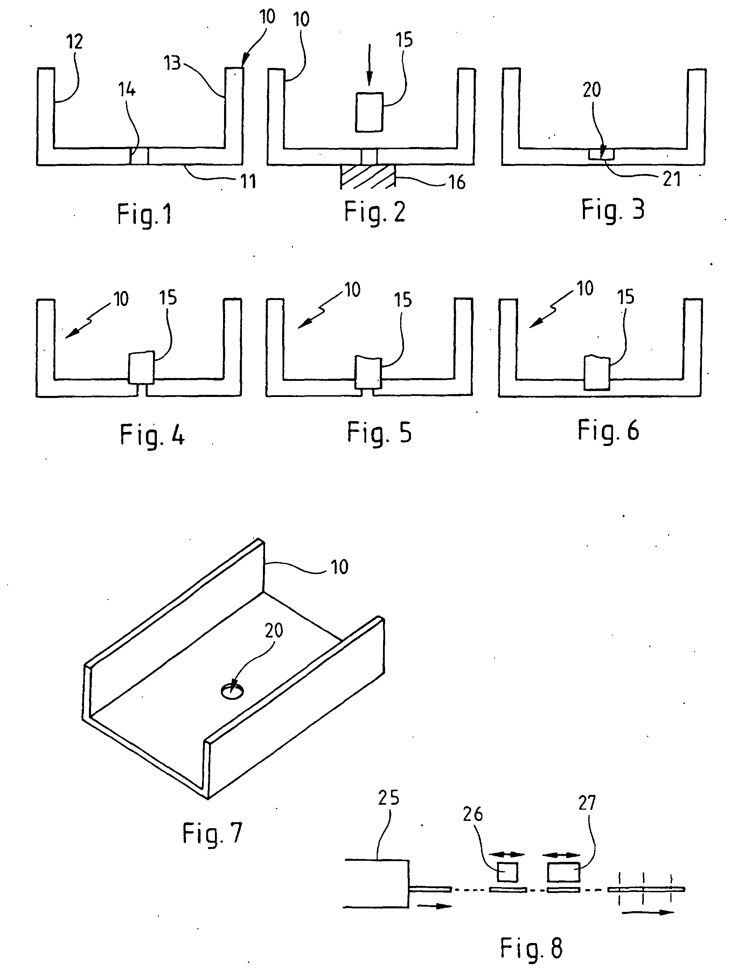

Les figures 1 à 3 présentent le principe du procédé de l'invention, dans le cas d'un profilé 10 dans lequel on souhaite réaliser une amorce de trou de forme simple (trou borgne).

Le profilé 10 comporte une paroi 11 d'épaisseur constante, mais il faut bien comprendre que cela n'est pas une condition de faisabilité. Plus précisément, ce profilé comporte deux ailes 12 et 13 bordant la paroi 11, donnant conjointement au profilé une section en U. Il s'agit avantageusement d'un profilé destiné à constituer le socle d'une goulotte de câblage électrique (auquel cas le volume interne de ce profilé est fermé en partie supérieure par un couvercle, non représenté, par exemple un autre profilé de forme en U, ou par une autre partie dudit profilé).

Tel que représenté à la figure 1 le profilé 10 a été réalisé, mais a en outre subi une opération de perçage (sur toute son épaisseur locale) suite à quoi il comporte en au moins un emplacement (de préférence de tels emplacements sont répartis tout au long du profilé) un évidement traversant 14.

La figure 2 représente une étape ultérieure de fabrication du profilé fini, dans laquelle on échauffe localement le profilé en sorte de rendre plastique une zone de ce profilé.

En pratique, l'échauffement est réalisé au moyen d'une sonde d'échauffement schématisée sous la référence 15 ; toutefois, en variante l'échauffement peut être réalisé par tout autre moyen, par exemple par une paroi sur laquelle le profilé circule.

Cette sonde d'échauffement a, dans l'exemple considéré, une double fonction, dans la mesure où elle sert aussi de poinçon pour, en coopération avec un contre-poinçon 16, qui peut n'être qu'une simple plaque plane, modifier la géométrie de cette zone rendue plastique, en sorte de délimiter dans le profilé une zone mécaniquement affaiblie constituant un trou ou une amorce de trou. Il faut néanmoins bien comprendre que le poinçon peut, en variante, être un élément distinct de la source fournissant l'énergie provoquant l'échauffement. Le fait d'utiliser la sonde comme poinçon a notamment pour effet de garantir que la matière située tout autour de l'évidement est rendue plastique (en pratique, le poinçon est mis dans le prolongement de l'évidement)

Cette amorce de trou apparaît aux figures 3 et 7 sous la référence 20. Elle a ici la forme d'un trou borgne dont le fond est un voile continu 21 qui obture la totalité de la section du futur trou. La surface de ce voile qui est à l'opposé du trou borgne affleure avec la surface du reste du profilé ; cela provient de ce que, comme indiqué ci-dessus, le contre-poinçon utilisé est une plaque plane.

Les figures 4 à 6 représentent trois étapes successives du poinçonnage, étape au cours de laquelle la matière de la pièce est mise en forme.

A la figure 4 le poinçon 15, dont la section est supérieure à celle de l'évidement 14, commence à refouler vers le bas de la matière rendue visqueuse par l'échauffement. A la figure 5, on observe que ce refoulement vers le bas provoque, sous le poinçon, un mouvement de la matière correspondant à un rétrécissement de la partie basse de l'évidement, et la figure 6 correspond au cas ou le poinçon, arrivé en fin de sa course utile, a provoqué une fermeture de cette partie basse de l'évidement.

On comprend aisément que, la matière n'étant sensiblement pas compressible, l'espace laissé dégagé par l'amorce de trou a le même volume que l'évidement 14. Connaissant le volume que l'on veut dégager lors de la formation de l'amorce de trou, on en déduit aisément le volume que doit avoir (si l'on ne veut pas de surépaisseurs) l'évidement 14 ; de préférence on réalise celui-ci par perçage traversant, ce qui a pour effet, notamment de bien contrôler le volume de cet évidement sans risquer que subsiste un quelconque copeau de matière.

La figure 8 représente de façon très schématique une installation adaptée à mettre en oeuvre le procédé de l'invention, avec un poste d'extrusion 25, un poste de perçage 26, et un poste d'échauffement et de poinçonnage 27, situés en ligne, c'est à dire que les opérations de perçage, d'échauffement et de poinçonnage sont réalisées sensiblement à la sortie du poste d'extrusion, ce qui explique que les postes 26 et 27 soient représentés comme étant adaptés à se déplacer parallèlement à la direction d'extrusion, pour pouvoir agir transversalement (de bas en haut) sur le profilé en cours de défilement. Le profilé obtenu comporte une succession de trous ou d'amorces de trou schématisées par des traits mixtes. Le poste 27 peut comporter, au choix, un même élément pour échauffer et poinçonner la matière plastique, ou deux éléments distincts proches les uns des autres (pour réduire le refroidissement entre l'échauffement et le formage ou poinçonnage). Par ailleurs, les postes 26 et 27 peuvent être solidaires, c'est à dire constituer conjointement un unique poste en mouvement, comportant plusieurs outils agissant successivement.

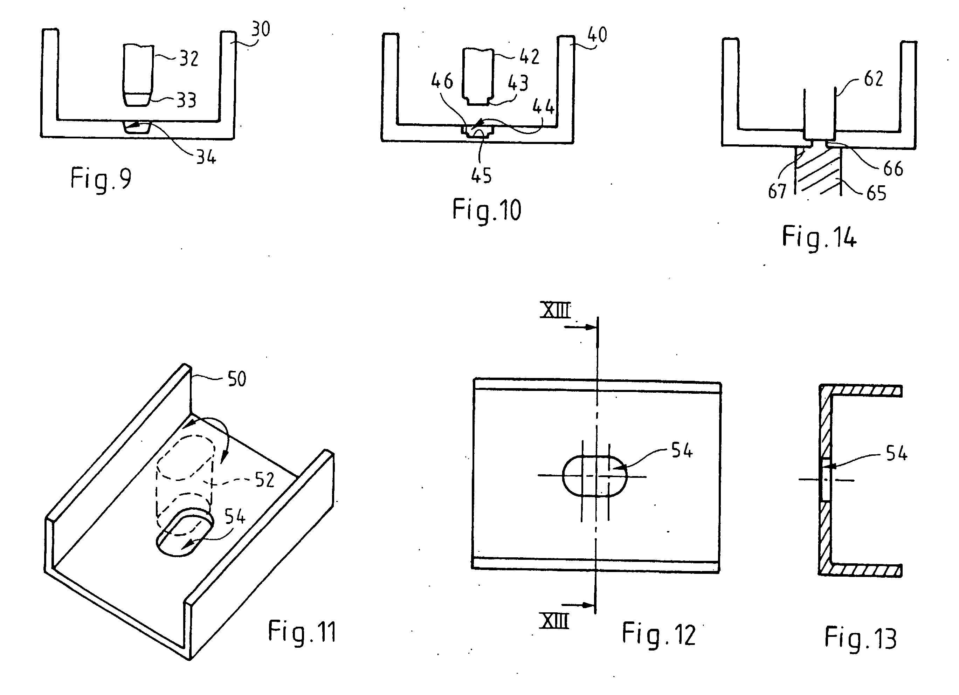

La figure 9 représente un autre profilé, repéré 30, se différenciant du profilé 10 par la forme de son amorce de trou 34. En effet celle-ci est de forme évasée, ce qui est obtenu par la mise en oeuvre d'un poinçon 32 dont la portion d'extrémité 33 est, non pas de section constante (cas du poinçon 15), mais de forme effilée. L'amorce de trou 34 a, en coupe transversale, une section trapézoidale.

Les poinçons 15 et 32 sont terminés par une face transversale plane.

La figure 10 représente le cas d'un poinçon 42, dont la portion d'extrémité, de section constante, est terminée par une face transversale comportant un gradin 43. Il en résulte, dans le profilé 40, une amorce de trou 44 formé par un trou borgne dont le fond 45 présente un rebord 46 (par exemple destiné à former un lamage résiduel).

La figure 11 représente un profilé 50 présentant, comme celui de la figure 7, une amorce de trou 54 complètement obturée en partie basse. Cette amorce se différencie de l'amorce de trou de la figure 7 par le fait que la section est oblongue, ici allongée dans le sens d'extrusion. Il est à noter qu'une telle forme ne pourrait pas être obtenue directement, par perçage. De manière préférée, le poinçon, schématisé sous la référence 52, est tourné de 90 ° entre deux amorces de trou successives, de sorte que ces dernières ont des orientations différentes, quoique réalisées avec un même poinçon.

Si l'on revient à la figure 10, on comprend que si l'on poursuivait le mouvement vers le bas du poinçon, on réaliserait, soit un trou lamé, soit une amorce de trou qui serait débouchante avec une partie basse de section restreinte, bordée par un voile périphérique (en d'autres termes le fond 45 de cette figure 10 aurait une épaisseur nulle au centre).

En variante (figures 14-17), la même géométrie de trou lamé ou d'amorce de trou (selon l'épaisseur du rebord 67) peut être obtenue dans un profilé 60 à l'aide d'un poinçon 62 terminé par une face transversale plane, coopérant avec un contre-poinçon 65 comportant une saillie 66. L'amorce de trou 64 est, comme expliqué ci-dessus, un trou dont la partie basse comporte une restriction bordée par un voile périphérique 67, ou un lamage (plus épais).

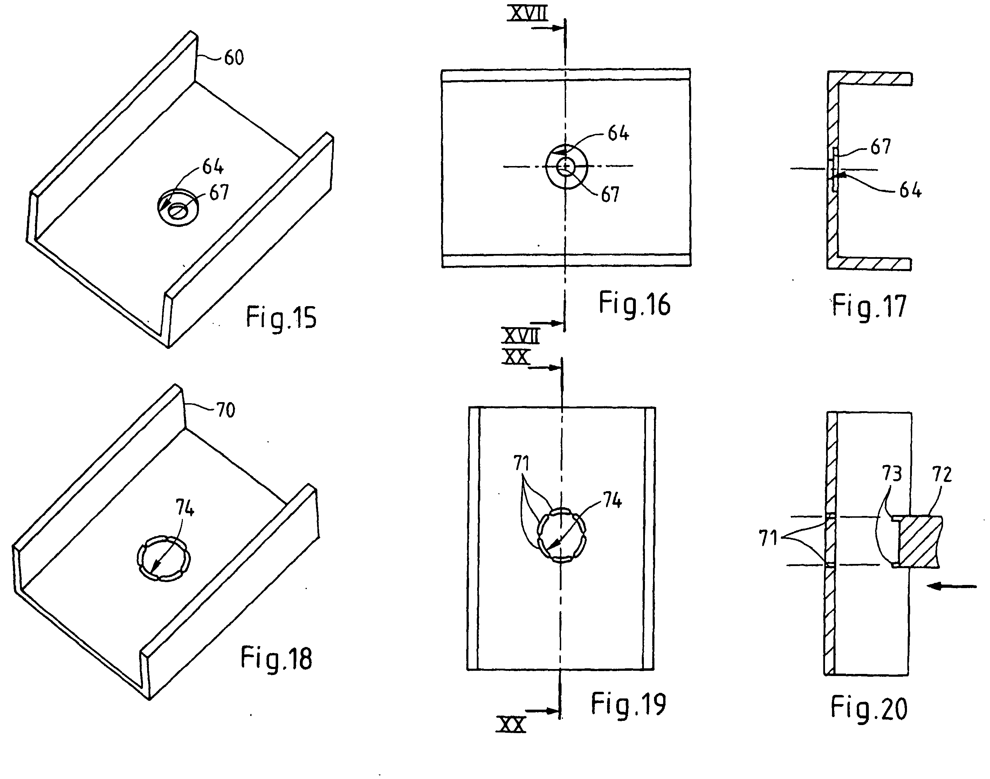

Les figures 18 à 20 correspondent à un autre type d'amorce de trou 74 qui, à la différence des précédentes, ne comporte pas de portions médianes de faible épaisseur, mais sont matérialisées par un contour séparant des portions interne et externe de même épaisseur (il peut bien entendu y avoir en outre une différence d'épaisseur). Bien entendu, ce qui suit est valable dans le cas où on veut une portion médiane de faible épaisseur.

On observe ainsi aux figures 18 et 19 un profilé 70 dans lequel est ménagée une série annulaire (mais n'importe quel, contour est possible) d'évidemment étroits 71 ; ces évidements forment conjointement une amorce de trou. Ainsi que cela ressort de la figure 20 ces évidements sont traversants, dans l'exemple considéré. Ils sont ici réalisés à l'aide d'un poinçon 72 dont la portion d'extrémité est terminée par une face transversale bordée par une série annulaire de dents 73. L'évidement traversant de départ peut, dans ce cas, être de faible section.

Diverses combinaisons des formes de trous ou d'amorces de trou décrites sont possibles dans le cadre de l'invention.

En ce qui concerne la source d'énergie provoquant l'échauffement, elle est d'autant plus sollicitée que la pièce (qu'il s'agisse d'un profilé ou non) est à la température ambiante. Par contre, dans le cas de la figure 8 où le perçage et le poinçonnage sont réalisés en ligne, l'apport énergétique est réduit par le fait que la matière constitutive du profilé peut ne pas avoir été complètement refroidie, étant à peine en-dessous de son seuil de solidification.

Cette source d'énergie thermique est de préférence une sonde (mais peut être une simple plaque chauffante) ; il s'agit avantageusement d'une sonde à ultra-sons (sonotrode), mais il peut s'agir de tout autre élément chauffànt connu approprié, telle qu'une pointe chauffante.

Bien entendu, l'invention ne se limite pas aux pièces extrudées et peut notamment s'appliquer à des pièces thermoformées voire des pièces injectées pour lesquelles l'invention permet la réalisation de trous ou d'amorces de trous sans compliquer le processus de thermoformage ou d'injection en évitant par exemple d'ajouter des tiroirs de moulage ; cela est particulièrement intéressant dans le cas de petites séries ne justifiant pas la constitution d'outillages trop complexes et coûteux.

Il peut être noté que, selon l'invention, l'étape selon laquelle on modifie la géométrie de la zone rendue plastique est effectuée sans enlèvement de matière (au contraire de la réalisation de l'évidement lors de la première étape). En outre cet évidement est réalisé dans une zone d'épaisseur constante (en d'autres termes la zone qui, autour de l'évidement, est rendue plastique lors de l'échauffement local est d'épaisseur constante) ; à titre de comparaison, le document, JP-05 116219, qui prévoit l'écrasement d'une cheminée entourée par une rainure annulaire, ne saurait être considéré comme décrivant un évidement réalisé dans une zone d'épaisseur constante. Il peut enfin être noté que la zone mécaniquement affaiblie que l'invention vise à obtenir peut être un trou traversant unique, mais sans que celui-ci puisse avoir une section constante sur toute l'épaisseur de la zone concernée.

Il peut être noté ici que le document US-4 391 426 décrit un profilé présentant, de manière classique, des trous oblongs sans variation de section pour le passage de vis.

L'utilisation d'un échauffement local d'une pièce thermoplastique est en soi connue d'après le document DE-2212 355, mais à des fins de lissage de surfaces planes ou courbes.

## Revendications

1. Procédé de fabrication d'un profilé en U pour goulotte muni d'au moins une zone mécaniquement affaiblie formant une amorce de trou dans une zone d'épaisseur constante, comportant une étape consistant à produire un profilé en U en matière thermoplastique (10, 20, 30, 40, 50, 60, 70), et pour former au moins une telle zone mécaniquement affaiblie formant une amorce de trou, au moins un cycle des étapes consistant à :
- réaliser localement un évidement traversant dans une zone de ce profilé qui a une épaisseur constante,
- échauffer localement ce profilé au moyen d'une sonde d'échauffement (15, 32, 42, 52, 62, 72) en sorte de rendre plastique cette zone de ce profité qui a une épaisseur constante,
- modifier à l'aide d'un poinçon (15, 32, 42, 52, 62, 72) la géométrie de cette zone rendue plastique en sorte de délimiter dans ce profilé une zone mécaniquement affaiblie constituant une amorce de trou, dont la forme est déterminée par celle du poinçon.

2. Procédé selon la revendication 1, **caractérisé en ce qu'**on réalise la zone rendue plastique en sorte qu'elle entoure l'évidement.

3. Procédé selon la revendication 1 ou la revendication 2, **caractérisé en ce que** l'on modifie la géométrie de la zone rendue plastique en sorte de délimiter la zone mécaniquement affaiblie sous la forme d'un trou borgne (20, 34. 44. 54) dont le fond est constitué d'un voile continu.

4. Procédé selon la revendication 1 ou la revendication 2, **caractérisé en ce que** l'on modifie la géométrie de la zone rendue plastique en sorte de délimiter la zone mécaniquement affaiblie sous la forme d'un trou traversant (64) bordé par un voile périphérique (67) sur une partie de sa hauteur.

5. Procédé selon la revendication 1 ou la revendication 2, **caractérisé en ce que** l'on modifie la géométrie de la zone rendue plastique en sorte de délimiter la zone mécaniquement affaiblie par un contour (74)formé d'évidements (71).

6. Procédé selon la revendication 5. **caractérisé en ce que** ce contour est formé d'évidements traversants (71).

7. Procédé selon l'une quelconque des revendications 1 à 6, **caractérisé en ce que** l'on produit par extrusion (25) le profilé en matière thermoplastique.

8. Procédé selon la revendication 7, **caractérisé en ce que** l'on réalise le cycle d'étapes au fur et à mesure que le profilé est extrudé.

9. Procédé selon l'une quelconque des revendications 1 à 8, **caractérisé en ce qu'**on réitère le cycle d'étapes en sorte de réaliser une succession d'amorces de trou.

10. Procédé selon l'une quelconque des revendications 1 à 9, **caractérisé en ce qu'**on échauffe localement le profilé au moyen d'une sonde (15, 32, 42, 52, 62, 72) dont une partie constitue le poinçon servant à modifier la géométrie de la zone rendue plastique.

11. Procédé selon l'une quelconque des revendications 1 à 10, **caractérisé en ce que** la sonde d'échauffement (15,32, 42, 52, 62, 72) est une sonde à ultra-sons.

12. Procédé selon l'une quelconque des revendications 1 à 11, **caractérisé en ce que** le poinçon (15, 32, 52, 62) comporte une portion d'extrémité terminée par une face transversale plane.

13. Procédé selon l'une quelconque des revendications 1 à 11, **caractérisé en ce que** le poinçon (42) comporte une portion d'extrémité par une face transversale comportant au moins un gradin.

14. Procédé selon la revendication 12 ou la revendication 13, **caractérisé en ce que** ladite portion d'extrémité a une section cylindrique.

15. Procédé selon la revendication 12 ou la revendication 13, **caractérisé en ce que** ladite portion d'extrémité a une section oblongue.

16. Procédé selon l'une quelconque des revendications 1 à 15, **caractérisé en ce que** ladite portion d'extrémité a une section décroissante.

17. Procédé selon l'une quelconque des revendications 1 à 13, **caractérisé en ce que** le poinçon comporte une portion d'extrémité terminée par une face transversale bordée par des dents axiales (73).

18. Profilé en U pour goulotte (10, 30, 40, 50, 60, 70) en matière plastique, adapté à être réalisé par le procédé selon l'une quelconque des revendications 1 à 17, comportant, dans une paroi d'épaisseur constante bordée par des ailes, une succession longitudinale de zones mécaniquement affaiblies formant des amorces de trou.

19. Profilé selon la revendication 18, **caractérisé en ce que** chaque zone mécaniquement affaiblie a la forme d'un trou borgne dont le fond est constitué d'un voile continu.

20. Profilé selon la revendication 18, **caractérisé en ce que** chaque zone mécaniquement affaiblie a la forme d'un trou traversant bordé par un voile périphérique.

21. Profilé selon la revendication 18, **caractérisé en ce que** chaque zone mécaniquement affaiblie est délimitée par un contour formé d'une succession d'évidements.

22. Profilé selon la revendication 18, **caractérisé en ce que** chaque zone mécaniquement affaiblie est délimitée par un contour (74) formé d'évidement traversants (71).

23. Profilé selon l'une quelconque des revendications 18 à 22, **caractérisé en ce que** cette zone affaiblie a une section oblongue.

24. Goulotte de câblage électrique comportant un socle et un couvercle, ce socle faisant partie d'un profilé en U selon l'une quelconque des revendications 18 à 23.

## Patentansprüche

1. Verfahren zur Herstellung eines U-Profilteils für eine Kabelrinne, das mit mindestens einer mechanisch geschwächten Zone versehen ist, die einen Lochansatz in einer Zone konstanter Dicke bildet, umfassend einen Schritt, der darin besteht, dass ein U-Profilteil aus Thermoplast (10, 20, 30, 40, 50, 60, 70) hergestellt wird und mindestens eine solche mechanisch geschwächte Zone, die einen Lochansatz bildet, geformt wird, wobei mindestens ein Zyklus der Schritte darin besteht, dass
- örtlich eine durchgehende Aussparung in einer Zone dieses Profilteils, die eine konstante Dicke besitzt, hergestellt wird,
- dieses Profilteil örtlich mit Hilfe einer Erhitzungssonde (15, 32, 42, 52, 62, 72) erhitzt wird, so dass diese Zone dieses Profilteils, die eine konstante Dicke besitzt, plastisch gemacht wird,
- mit Hilfe eines Stempels (15, 32, 42, 52, 62, 72) die Geometrie dieser plastisch gemachten Zone so verändert wird, dass in diesem Profilteil eine mechanisch geschwächte einen Lochansatz bildende Zone abgegrenzt wird, deren Form durch die des Stempels bestimmt ist.

2. Verfahren nach Anspruch 1, **dadurch gekennzeichnet, dass** man die plastisch gemachte Zone so herstellt, dass sie die Aussparung umgibt.

3. Verfahren nach Anspruch 1 oder Anspruch 2, **dadurch gekennzeichnet, dass** man die Geometrie der plastisch gemachten Zone so verändert, dass die mechanisch geschwächte Zone in der Form eines Sacklochs (20, 34, 44, 54) abgegrenzt wird, dessen Boden aus einer durchgehenden Wand besteht.

4. Verfahren nach Anspruch 1 oder Anspruch 2, **dadurch gekennzeichnet, dass** man die Geometrie der plastisch gemachten Zone so ändert, dass die mechanisch geschwächte Zone in der Form eines durchquerenden Lochs (64) abgegrenzt wird, das auf einem Teil seiner Höhe von einer Umfangswand (67) gesäumt ist.

5. Verfahren nach Anspruch 1 oder Anspruch 2, **dadurch gekennzeichnet, dass** man die Geometrie der plastisch gemachten Zone so verändert, dass man die mechanisch geschwächte Zone durch einen von Aussparungen (71) gebildeten Umriss (74) begrenzt.

6. Verfahren nach Anspruch 5, **dadurch gekennzeichnet, dass** dieser Umriss von durchquerenden Aussparungen (71) gebildet ist.

7. Verfahren nach einem der Ansprüche 1 bis 6, **dadurch gekennzeichnet, dass** man das Profilteil aus Thermoplast durch Extrusion (25) herstellt.

8. Verfahren nach Anspruch 7, **dadurch gekennzeichnet, dass** man den Zyklus von Schritten in dem Maß ausführt, in dem das Profilteil extrudiert wird.

9. Verfahren nach einem der Ansprüche 1 bis 8, **dadurch gekennzeichnet, dass** man den Zyklus von Schritten so reiteriert, dass eine Folge von Lochansätzen hergestellt wird.

10. Verfahren nach einem der Ansprüche 1 bis 9, **dadurch gekennzeichnet, dass** man das Profilteil mit Hilfe einer Sonde (15, 32, 42, 52, 62, 72) örtlich erhitzt, von der ein Teil den Stempel bildet, der zum Verändern der Geometrie der plastisch gemachten Zone dient.

11. Verfahren nach einem der Ansprüche 1 bis 10, **dadurch gekennzeichnet, dass** die Erhitzungssonde (15, 32, 42, 52, 62, 72) eine Ultraschallsonde ist.

12. Verfahren nach einem der Ansprüche 1 bis 11, **dadurch gekennzeichnet, dass** der Stempel (15, 32, 52, 62) einen Endabschnitt aufweist, der mit einer ebenen Querseite endet.

13. Verfahren nach einem der Ansprüche 1 bis 11, **dadurch gekennzeichnet, dass** der Stempel (42) einen Endabschnitt aufweist, der mit einer ebenen Querseite endet, die mindestens eine Stufe aufweist.

14. Verfahren nach Anspruch 12 oder Anspruch 13, **dadurch gekennzeichnet, dass** der Endabschnitt einen zylindrischen Querschnitt besitzt.

15. Verfahren nach Anspruch 12 oder Anspruch 13, **dadurch gekennzeichnet, dass** dieser Endabschnitt einen länglichen Querschnitt aufweist.

16. Verfahren nach einem der Ansprüche 1 bis 15, **dadurch gekennzeichnet, dass** dieser Endabschnitt einen abnehmenden Querschnitt aufweist.

17. Verfahren nach einem der Ansprüche 1 bis 13, **dadurch gekennzeichnet, dass** der Stempel einen Endabschnitt aufweist, der mit einer Querseite endet, die von axialen Zähnen (73) gesäumt ist.

18. U-Profilteil für eine Kabelrinne (10, 30, 40, 50, 60, 70) aus Kunststoff, das dafür ausgelegt ist, in dem Verfahren nach einem der Ansprüche 1 bis 17 hergestellt zu werden, umfassend in einer Wand von konstanter Dicke, die von Rippen gesäumt ist, eine Längsfolge von mechanisch geschwächten Zonen, die Lochansätze bilden.

19. Profilteil nach Anspruch 18, **dadurch gekennzeichnet, dass** jede mechanisch geschwächte Zone die Form eines Sacklochs hat, dessen Boden aus einer durchgehenden Wand besteht.

20. Profilteil nach Anspruch 18, **dadurch gekennzeichnet, dass** jede mechanisch geschwächte Zone die Form eines durchquerenden Lochs hat, das von einer Umfangswand gesäumt ist.

21. Profilteil nach Anspruch 18, **dadurch gekennzeichnet, dass** jede mechanisch geschwächte Zone durch einen Umriss begrenzt ist, der von einer Folge von Aussparungen gebildet ist.

22. Profilteil nach Anspruch 18, **dadurch gekennzeichnet, dass** jede mechanisch geschwächte Zone von einen Umriss (74) begrenzt ist, der von durchquerenden Aussparungen (71) gebildet ist.

23. Profilteil nach einem der Ansprüche 18 bis 22, **dadurch gekennzeichnet, dass** diese geschwächte Zone einen länglichen Querschnitt besitzt.

24. Elektrische Verkabelungsrinne, umfassend einen Sockel und einen Deckel, wobei dieser Sockel Teil eines U-Profilteils nach einem der Ansprüche 18 bis 23 bildet.

## Claims

1. Method for the production of a U-shaped profile for trunking equipped with at least one mechanically weakened area forming a hole precursor in an area of constant thickness, comprising a step consisting of producing a U-shaped profile made of thermoplastic (10, 20, 30, 40, 50, 60, 70), and in order to form at least one such mechanically weakened area forming a hole precursor at least one cycle of the steps consisting of:
- locally producing a through-opening in an area of this profile which has a constant thickness,
- heating this profile locally by means of a heating probe (15, 32, 42, 52, 62, 72) so as to render plastic this area of this profile which has a constant thickness,
- using a punch (15, 32, 42, 52, 62, 72) to modify the geometry of this area rendered plastic so as to delimit in this profile a mechanically weakened area constituting a hole precursor, the shape of which is determined by that of the punch.

2. Method according to claim 1, **characterized in that** the area rendered plastic is produced in such a way that it surrounds the opening.

3. Method according to claim 1 or claim 2, **characterized in that** the geometry of the area rendered plastic is modified so as to delimit the mechanically weakened area in the form of a blind hole (20, 34, 44, 54) the bottom of which is constituted by a continuous web.

4. Method according to claim 1 or claim 2, **characterized in that** the geometry of the area rendered plastic is modified so as to delimit the mechanically weakened area in the form of a through-hole (64) bordered by a peripheral web (67) over a part of its height.

5. Method according to claim 1 or claim 2, **characterized in that** the geometry of the area rendered plastic is modified so as to delimit the mechanically weakened area by a contour (74) formed by openings (71).

6. Method according to claim 5, **characterized in that** this contour is formed by through-openings (71).

7. Method according to any one of claims 1 to 6, **characterized in that** the thermoplastic profile is produced by extrusion (25).

8. Method according to claim 7, **characterized in that** the cycle of steps is carried out as the profile is extruded.

9. Method according to any one of claims 1 to 8, **characterized in that** the cycle of steps is repeated so as to produce a succession of hole precursors.

10. Method according to any one of claims 1 to 9, **characterized in that** the profile is heated locally by means of a probe (15, 32, 42, 52, 62, 72) one part of which constitutes the punch serving to modify the geometry of the area rendered plastic.

11. Method according to any one of claims 1 to 10, **characterized in that** the heating probe (15, 32, 42, 52, 62, 72) is an ultrasound probe.

12. Method according to any one of claims 1 to 11, **characterized in that** the punch (15, 32, 52, 62,) has an end portion terminating in a plane transverse face.

13. Method according to any one of claims I to 11, **characterized in that** the punch (42) has an end portion having a transverse face comprising at least one step.

14. Method according to claim 12 or claim 13, **characterized in that** said end portion has a cylindrical section.

15. Method according to claim 12 or claim 13, **characterized in that** said end portion has an oblong section.

16. Method according to any one of claims 1 to 15, **characterized in that** said end portion has a decreasing section.

17. Method according to any one of claims 1 to 13, **characterized in that** the punch has an end portion terminating in a transverse face bordered by axial teeth (73).

18. U-shaped profile for trunking (10, 30, 40, 50, 60, 70) made of plastic, which is able to be produced by the method according to any one of claims 1 to 17, comprising, in a wall with constant thickness bordered by flanges, a longitudinal succession of mechanically weakened areas forming hole precursors.

19. Profile according to claim 18, **characterized in that** each mechanically weakened area has the shape of a blind hole the bottom of which is constituted by a continuous web.

20. Profile according to claim 18, **characterized in that** each mechanically weakened area has the shape of a through-hole bordered by a peripheral web.

21. Profile according to claim 18, **characterized in that** each mechanically weakened area is delimited by a contour formed by a succession of openings.

22. Profile according to claim 18, **characterized in that** each mechanically weakened area is delimited by a contour (74) formed by through-openings (71).

23. Profile according to any one of claims 18 to 22, **characterized in that** this weakened area has an oblong section.

24. Electrical wiring trunking comprising a base portion and a cover, this base portion forming part of a U-shaped profile according to any one of claims 18 to 23.
